# EUROPEAN PATENT SPECIFICATION

(11) **EP 4 526 187 B1**
(45) Date of publication and mention of the grant of the patent: **11.03.2026**
(21) Application number: 23729522.5
(22) Date of filing: 08.05.2023
(51) Int. Cl.: B62D 25/18

(54) **MUDGUARD AND METHOD FOR MOUNTING A MUDGUARD**
KOTFLÜGEL UND VERFAHREN ZUR MONTAGE EINES KOTFLÜGELS
GARDE-BOUE ET PROCÉDÉ DE MONTAGE CORRESPONDANT

(30) Priority: 18.05.2022 IT 202200010304
(43) Date of publication of application: 26.03.2025
(73) Proprietor: BAWER S.P.A., 75100 Matera (MT) (IT)
(72) Inventor: LORUSSO, Pasquale, 70022 ALTAMURA (BA) (IT); SARDONE, Agostino, 70022 ALTAMURA (BA) (IT)
(74) Representative: Russo, Dimitri
(86) International application number: PCT/IT2023/050118
(87) International publication number: WO 2023/223367

(56) References cited:
- EP-A1- 3 514 041
- EP-A1- 3 978 335
- WO-A1-2021/218127

## Description

### TECHNICAL FIELD

An object of the invention is a mudguard.

Particularly, an object of the invention is a mudguard for vehicles.

Another object of the invention is to provide two alternative methods for mounting a mudguard to a frame of a vehicle, in which the vehicle is in particular a heavy vehicle, such as for example a truck.

### PRIOR ART

Mudguards for vehicles that can be fixed to the frame of vehicles with different operational modes are known. Document EP 3 514 041 Al discloses a mudguard according to the preamble of claim 1.

The known mudguards generally suffer because of the vibrations and/or impacts they are subjected to, which can determine their detachment from the frame.

In order to reduce this issue, using complex systems for blocking the mudguard to the vehicle which, however, simultaneously require a laborious and long installation, representing a limit in the maintenance and substitution operations because of the costs for performing said operations, is known.

An object of the invention is to make a mudguard which overcomes the drawbacks of the prior art. Another object of the present invention is to make a mudguard efficiently fixing to a frame.

A specific object of the present invention is to make a mudguard being easy and quick and precise in terms of mounting/dismounting.

Another object of the present invention is to make two alternative methods for mounting a mudguard being easily performable.

Another object of the present invention is to include at least three possible constructive variations under a single geometry of the mudguard, comprising in any constructive variation thereof radial protuberances as described below.

### SUMMARY

In a first aspect, the invention describes a mudguard, as described in claim 1.

Advantageous aspects are described in the dependent claims from 2 to 9.

In a second aspect, the invention describes two alternative methods for mounting mudguard, as described in claims 10 and 11.

Advantageous aspects is described in the dependent claim 12.

The invention achieves the following technical effects:
- efficiently fixing the mudguard to the frame;
- quickly and precisely mounting the mudguard to the frame;
- adjusting the mudguard to the frame;
- single exterior geometry of the mudguard with three versions of the same:
   - simple version;
   - quick graft version;
   - adjustable quick graft version.

The cited technical effects/advantages and other technical effects/advantages of the invention will be more evident from the description, made herein below, of an exemplary embodiment given for illustrative and non-limiting purposes with reference to the attached drawings.

### BRIEF DESCRIPTION OF THE DRAWINGS

Figure 1 is a schematic view of a mudguard, according to the invention.
Figure 2 is a schematic view of the mudguard of figure 1, according to a first embodiment of the invention hereinafter referred to as simple version, characterized by having both street-side and frame-mounting-side vertical side edges being totally closed.

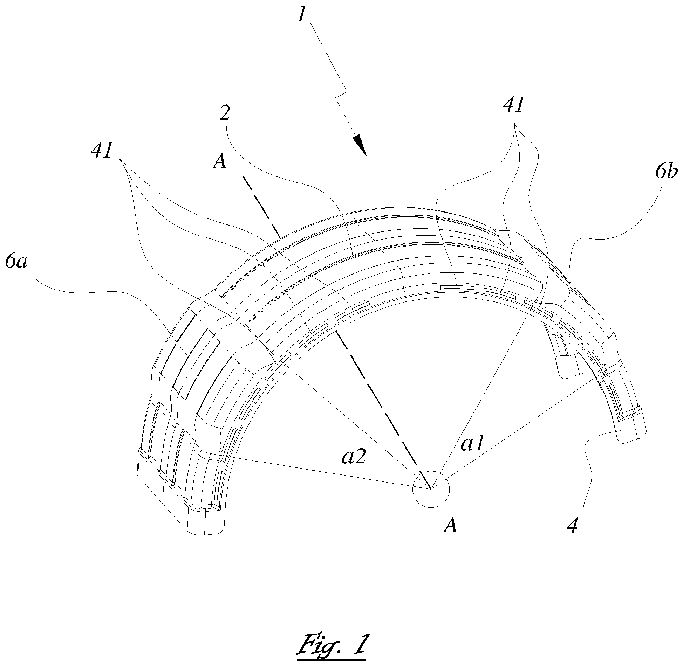

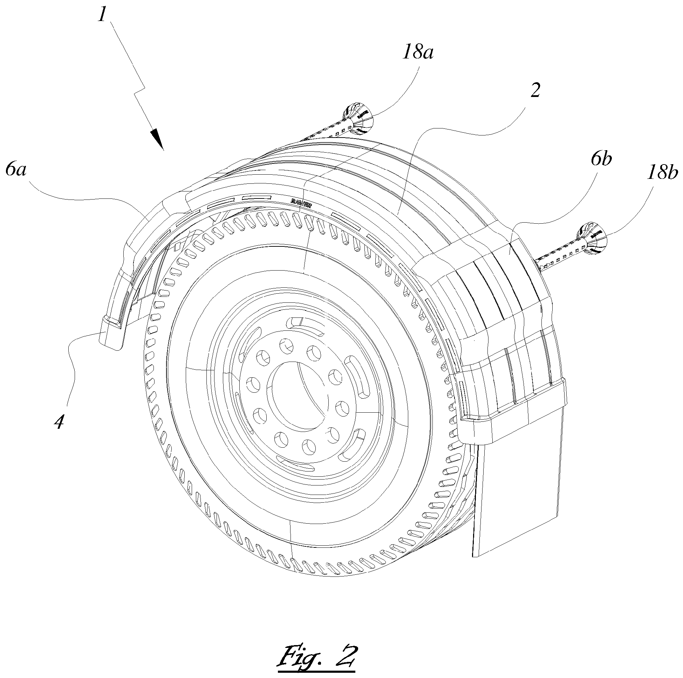

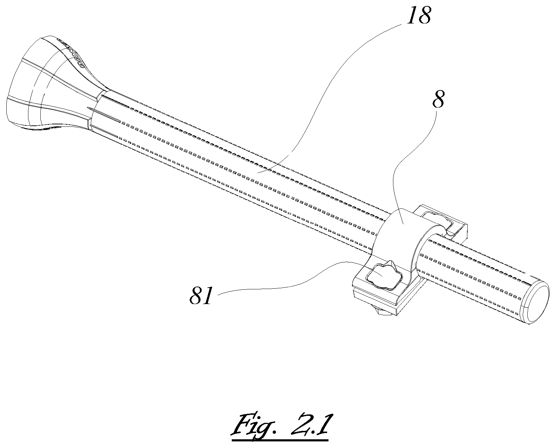

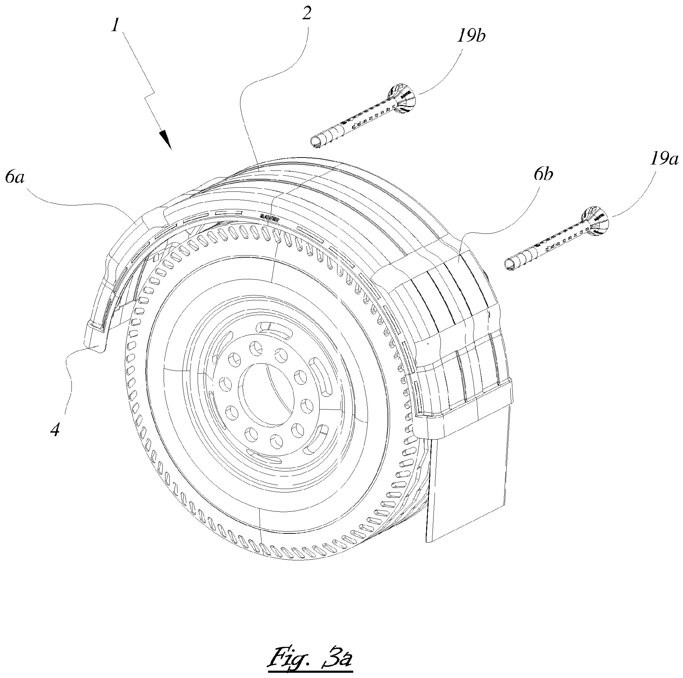

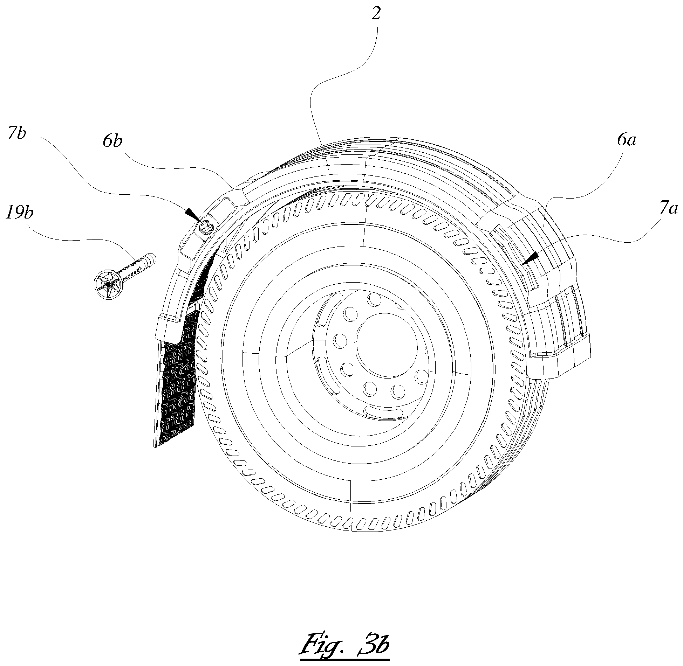

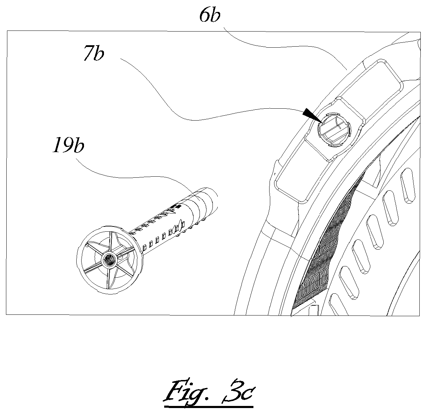

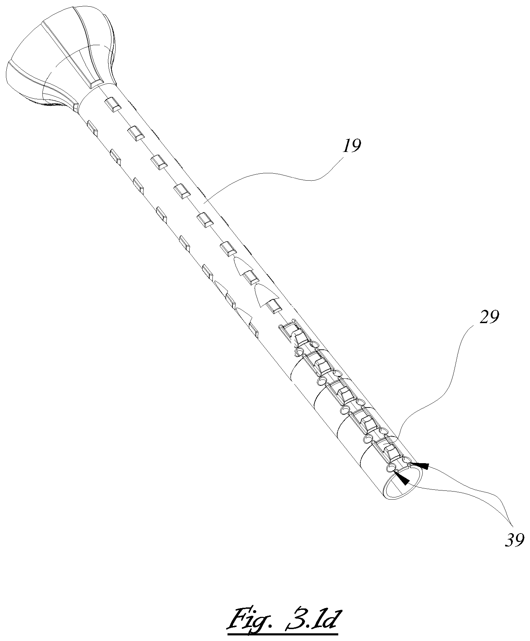

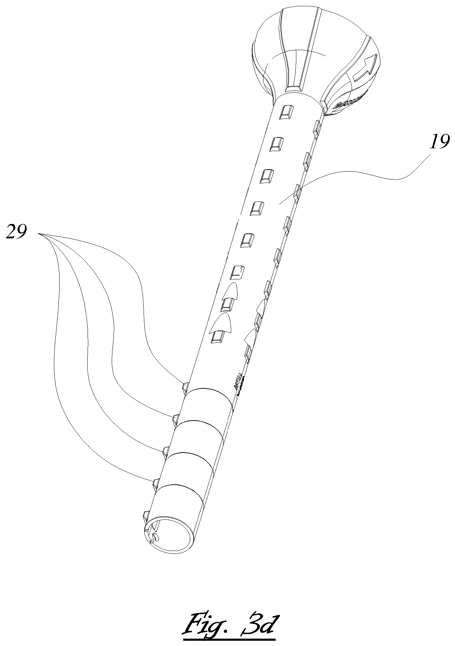

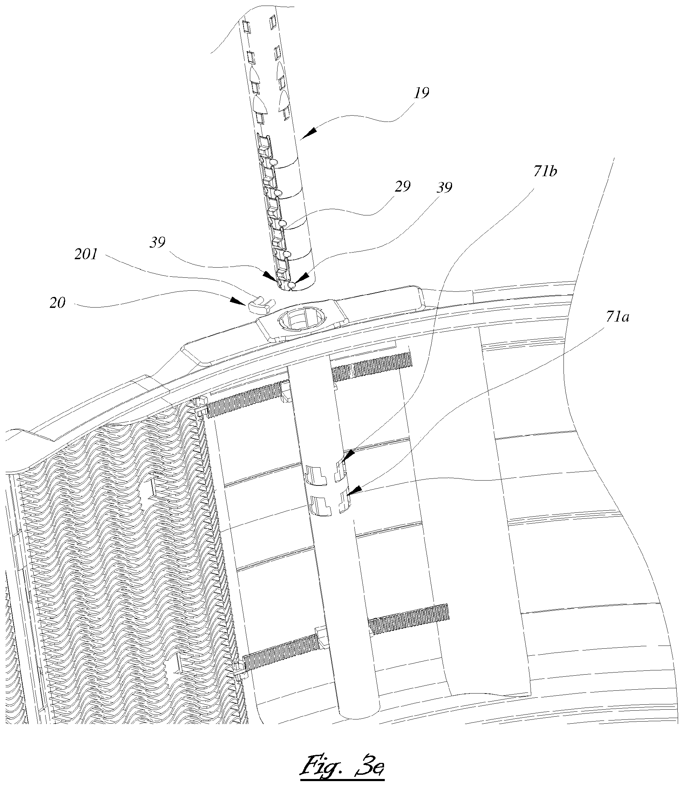

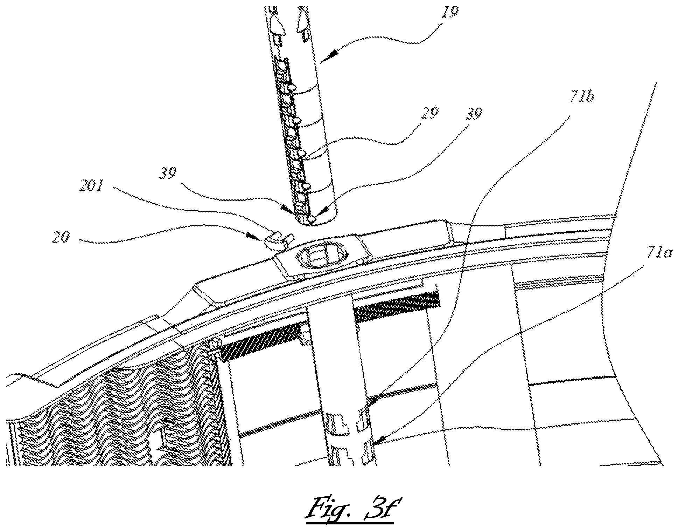

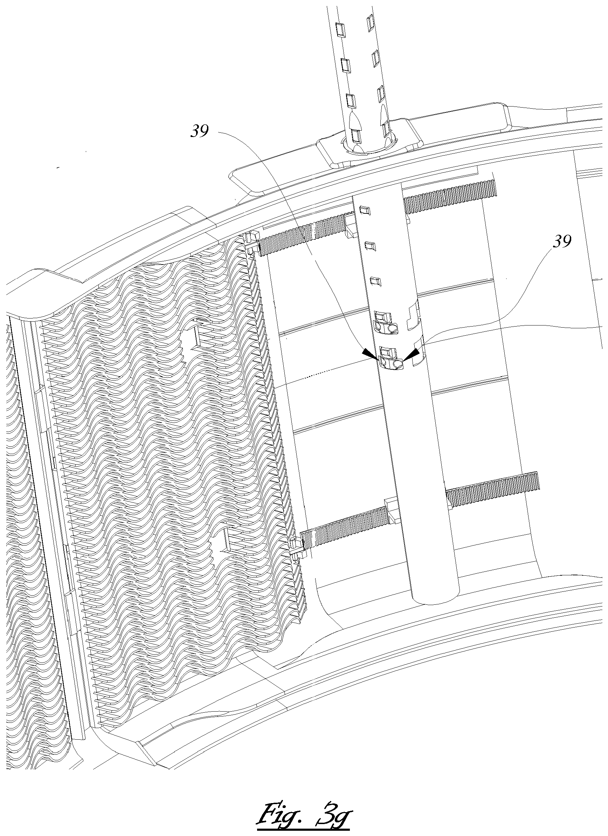

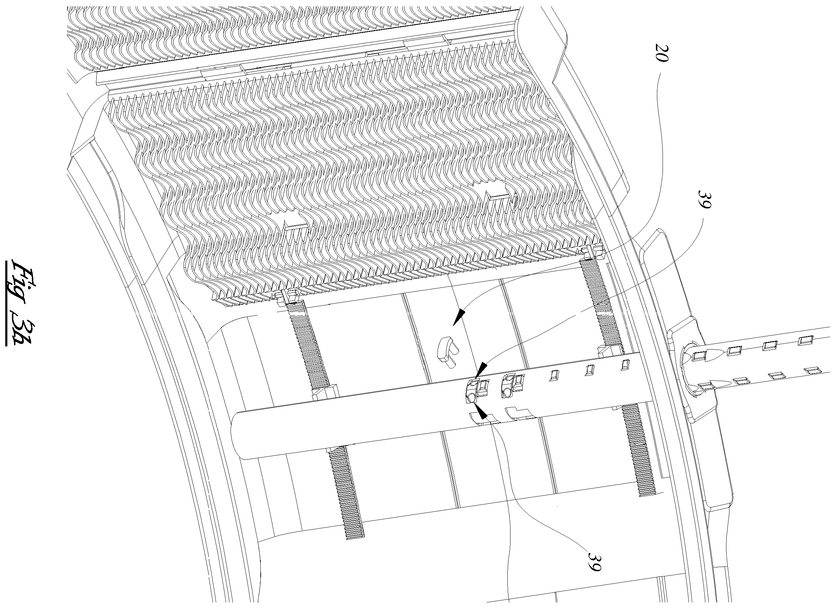

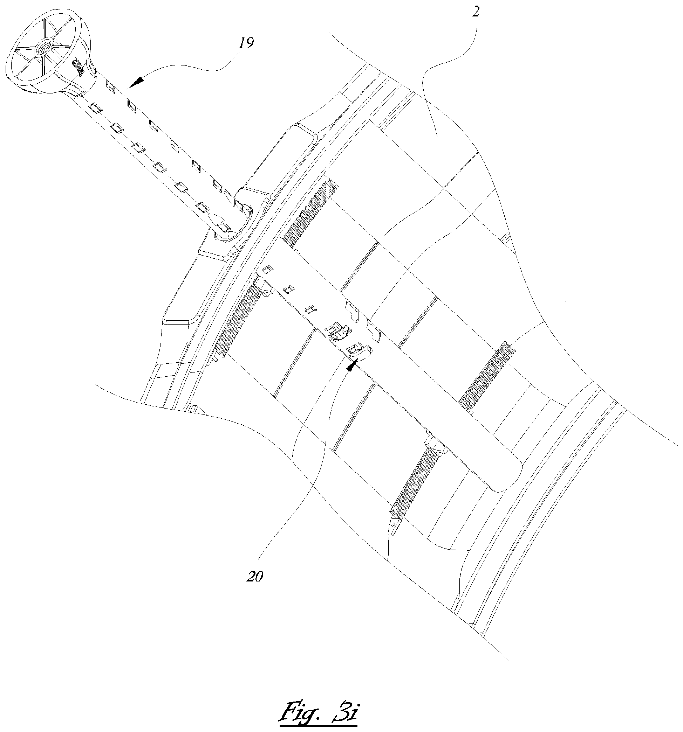

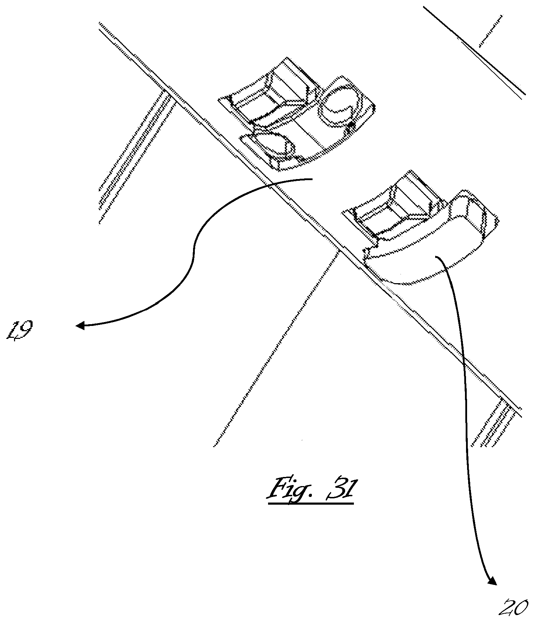

The group of figures 3 is a schematic view of the mudguard of figure 1, according to a second variation hereinafter referred to as Quick Graft (QG) version and characterized by having, with respect to the simple version of figure 2, the mounting-frame-side vertical edge in figure 3b provided with two housing holes 7a and 7b adapted to accommodate plastic tubular supporting systems 19a and 19b.

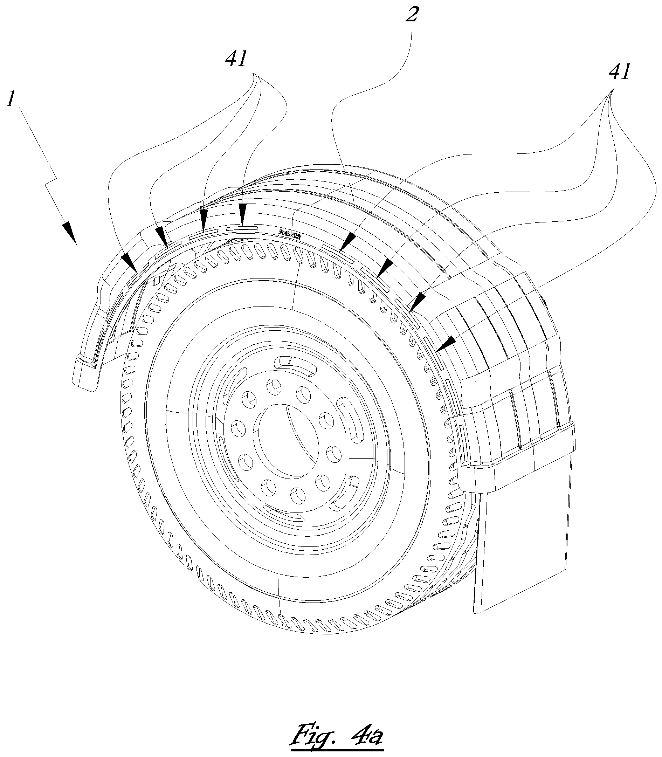

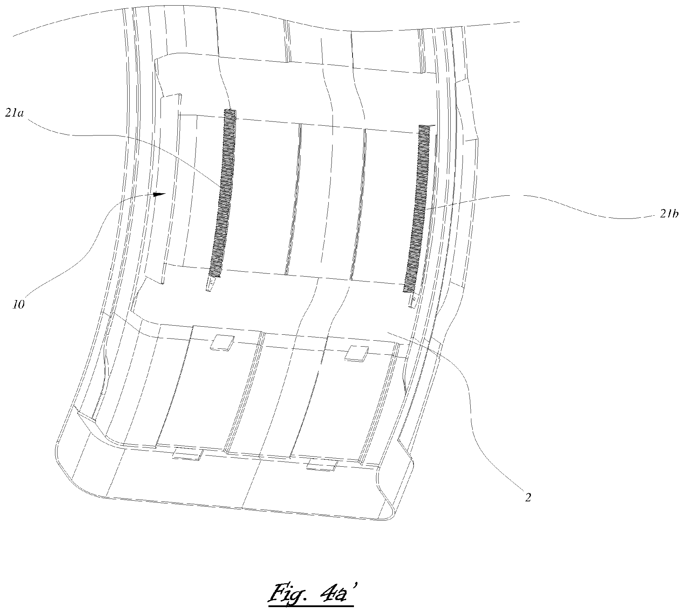

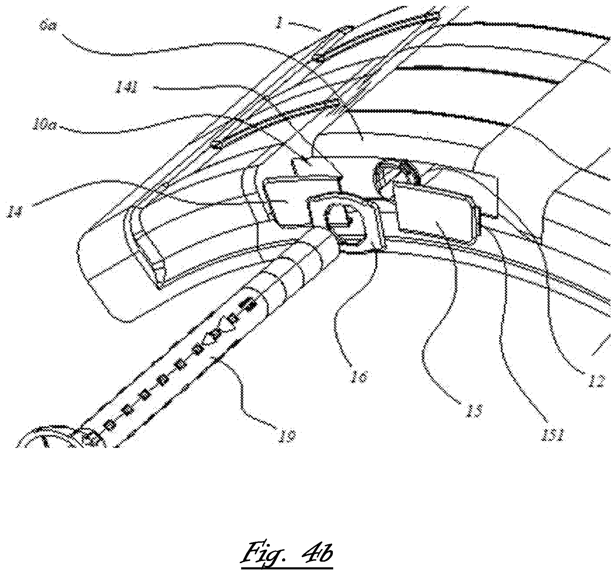

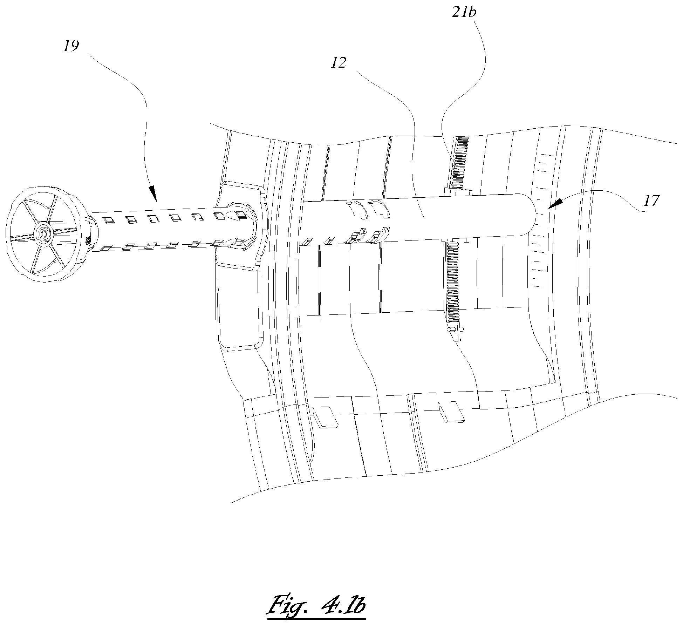

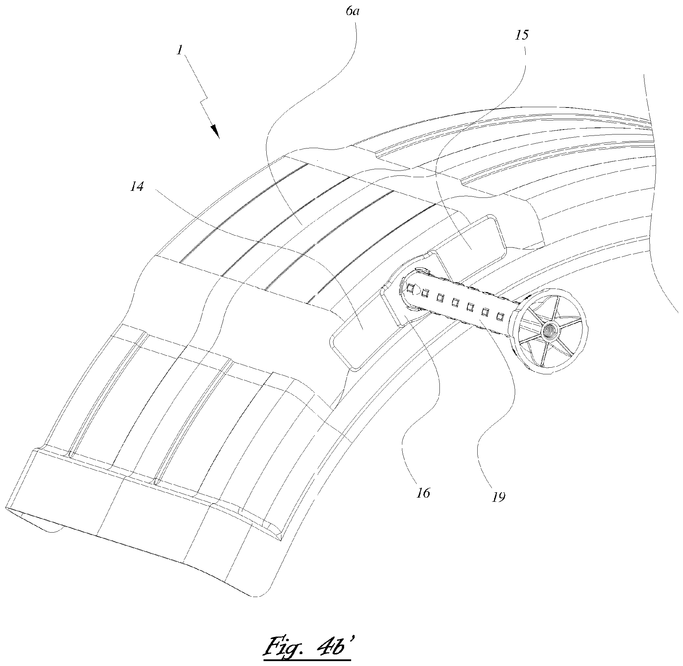

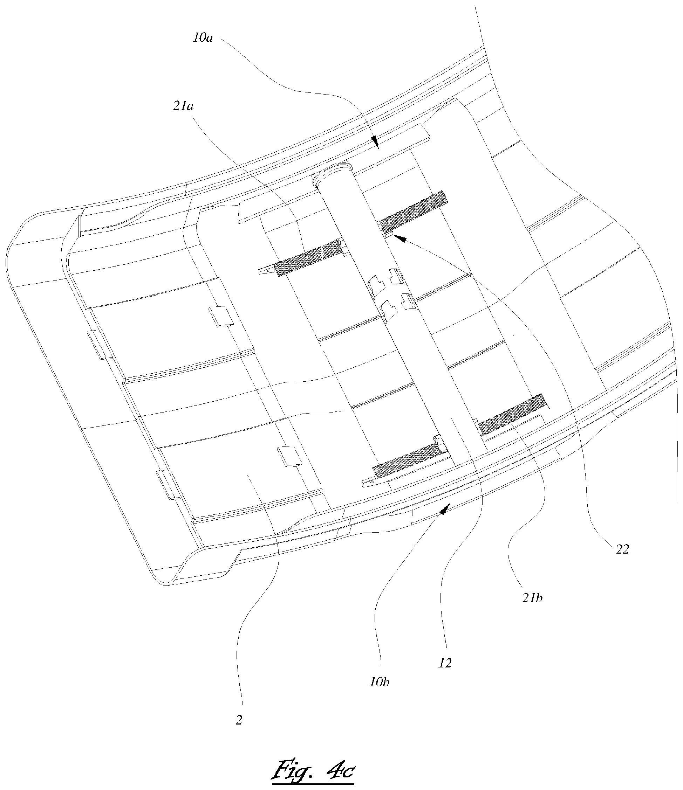

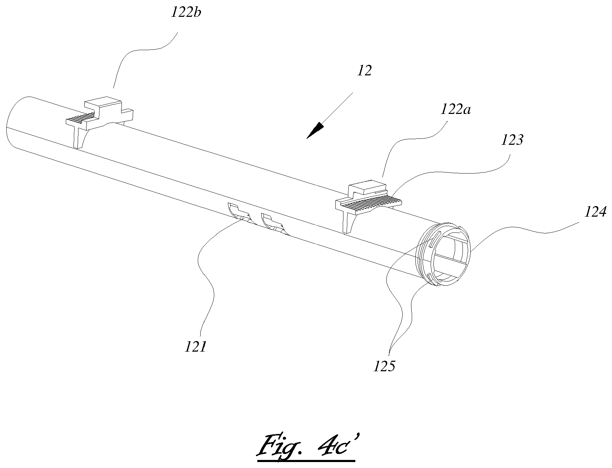

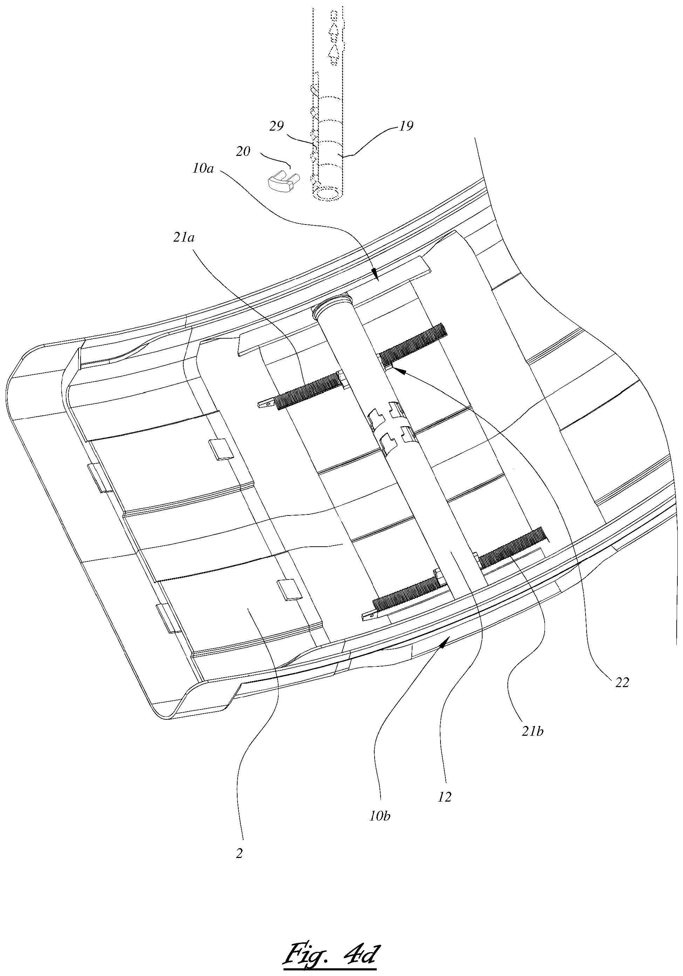

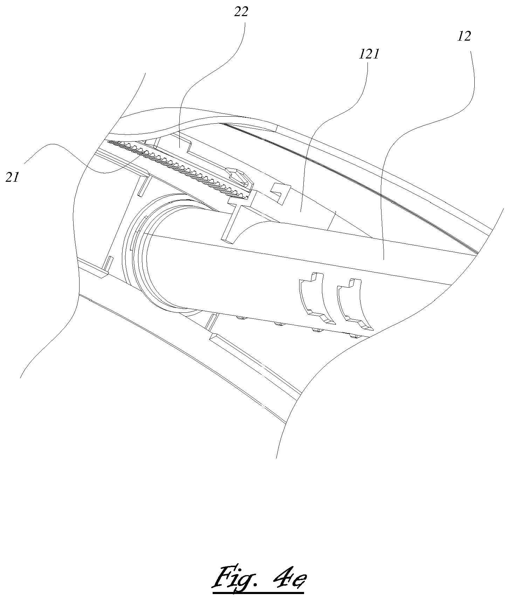

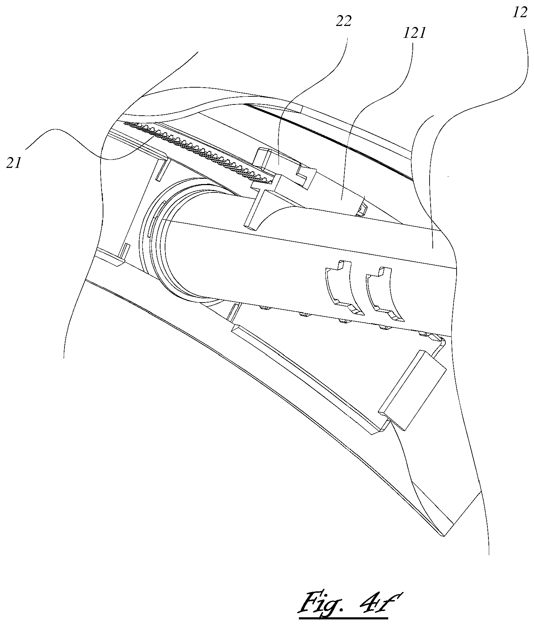

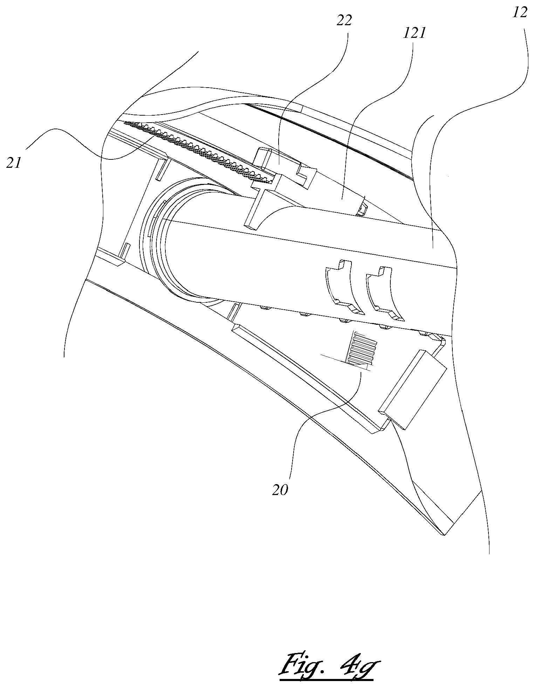

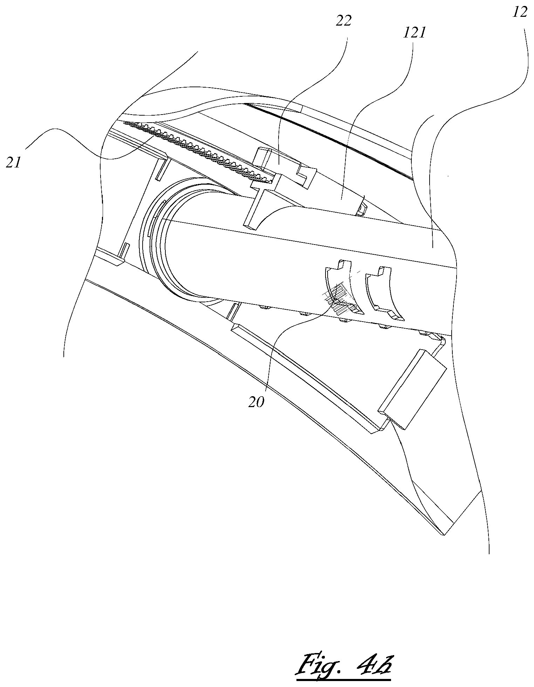

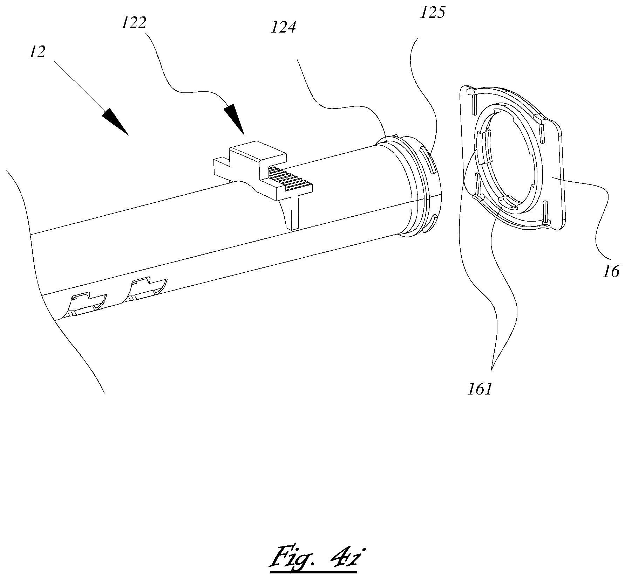

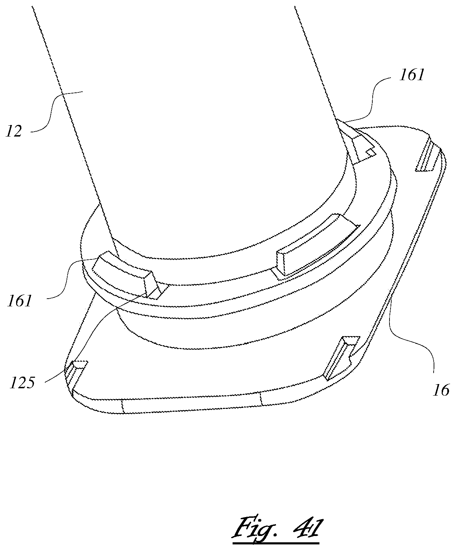

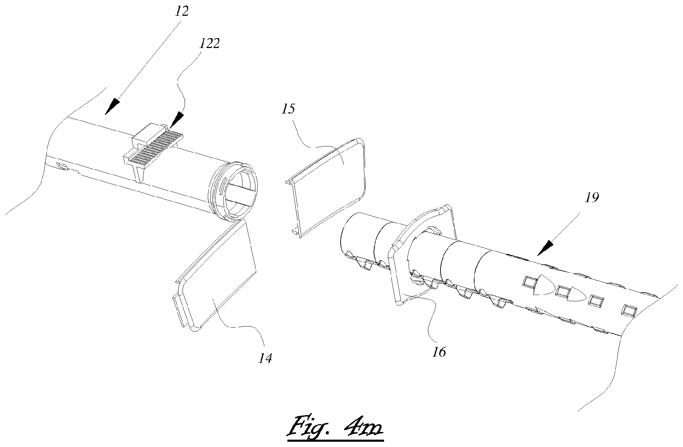

The group of figures 4 (4a, 4a', 4b, 41b, 4b', 4c, 4c', 4d, 4e, 4f, 4g, 4h, 4i, 41, 4m) is a set of schematic views of the mudguard of figure 1, according to a third variation hereinafter referred to as Adjustable Quick Graft (AQG) version and characterized by having, with respect to the simple version of figure 2, the vertical edge positioned on the internal wheel side, i.e., frame-mounting side of the means, in figure 4b provided with two housing slots 10a and 10b for supporting systems better described below.

### DETAILED DESCRIPTION

With reference to figure 1, in a first aspect, the invention describes a mudguard 1 for vehicle comprising an operational wall 2 of mudguard in unique body having an arc-shaped development around a central axis A-A adapted to be arranged parallel to a rotation axis of a vehicle tyre; later in the description, the term "axially" or "axial direction" means a direction parallel to the central axis A-A.

The mudguard 1 comprises a head or side edging 4 surrounding each longer side of the operational wall 2; any head or side edging 4 extends from the operational wall 2 of the mudguard towards a concavity of the wall and in unique body with the wall itself.

Furthermore, the head edging 4 afferent on the external side of the vehicle is provided with discontinuous and equally spaced bands 41 positioned along the semi-circumference defining the external perimeter of the mudguard 1.

Such side bands 41 have the function of highlighting and noticing the presence of the mudguard and the wheels of the vehicle.

According to the invention, the operational wall 2 of mudguard comprises two radial expansions (6a,6b) in unique body with the operational wall 2, wherein each radial expansion axially extends between the head or side edgings 4 and radially away from the central axis A-A.

According to the invention, said two radial expansions (6a,6b) are arranged for coupling by mounting means the mudguard 1 to the vehicle.

With particular reference to figure 1, according to the invention, the radial expansions 6a, 6b are arranged in positions which are symmetrical with respect to a centreline plane of the mudguard 1 passing through the central axis A-A.

Still with reference to figure 1, according to the invention, each circumferential extension of the radial expansions 6a, 6b underlies a central angle α1, α2 referred to the central axis A-A, congruent to each other and symmetrical with respect to said vertical plane.

The technical effect achieved by a radial expansion in unique body with the mudguard and not circumferentially limited to a size due to a diameter of a pin for fixing the mudguard to a frame is a greater distribution on the mudguard of the stresses deriving from vibrations and/or impacts ensuring greater efficiency in fixing the mudguard to the frame.

Moreover, such radial expansions constitute the slots for housing suitable frame-fixing devices in their intrados.

With reference to the group of figures 2, a first preferred embodiment of the invention is shown. The mudguard 1 comprises mounting means made as mounting brackets 8 arranged each radially externally on each of the radial expansions 6a, 6b.

In other words, the mounting brackets 8 are radially mounted on external extrados of the radial expansions 6a, 6b, particularly by means of known devices such as screws, nuts, and washers.

The mounting brackets 8 allow a plastic tube 18 provided with dedicated radial protuberances which remarkably improve the surface contacting the mounting brackets 8 to be fixed to the mudguard. The tubes 18 are adapted to be housed within the fixing brackets 8. Such tubes 18a, 18b are arranged at the rear for coupling with the frame of the vehicle, preferably by using known systems such as screws and washers.

With reference to the group of figures 3, a second preferred embodiment of the invention is shown. The group of figures 3 comprises figures 3a, 3b, 3c, 3.1d, 3d, 3e, 3f, 3g, 3h, 3i, 3l.

Figure 3a is an overall view of the mudguard of the second embodiment from the outside of a wheel of vehicle or street side.

Figure 3b is an overall view of the mudguard of the second embodiment taken from the inside of the wheel of vehicle or frame side of the means.

Figure 3c is a view of a detail of figures 3a and 3b.

With particular reference to figures 3b, 3c, the mudguard 1 comprises, in the two radial expansions (6a,6b), corresponding seats 7a, 7b derived parallel to the central axis A-A and integral with the mudguard 1.

According to the invention, the mudguard 1 comprises second mounting means comprising quick graft tubes 19a, 19b, the latter being arranged for an engaging coupling within said seats 7a, 7b.

The assembly of the seats 7a, 7b and the quick graft tube allows the mudguard to be quickly fixed to the frame of the vehicle compared to traditional bracketing methods.

This is because the fixing of the tubes 19a and 19b to the frame of the means is facilitated by needing only a single screw for mounting thereof; the subsequent step of inserting the dedicated seats 7a and 7b derived in the radial expansions 6a and 6b on the corresponding quick graft tubes 19a and 19b, is facilitated because the blocking elements 29 derived on the quick graft tubes 19a and 19b are of the snap-type, and irreversibly engage in the slots 71a and 71b forming part of the seats 7a and 7b; the mounting is completed by dedicated guise stopping devices of safety systems 20 (anti-break-in-safety block) provided with dedicated spear-shaped teeth 201 irreversibly engaging with dedicated cylindrical seats 39 derived on the tubes 19a and 19b; these elements 20 do not need traditional-type fixing.

Such safety systems 20 make the axial loosening of the tube 19 (a or b) with respect to the corresponding seat 7 (a or b) impossible and accordingly make (except for intentional breaking of the component 20) both break-in and accidental loosening of the mudguard 1 with respect to the related quick graft tubes 19a and 19b impossible.

With particular reference to figure 4, a third preferred embodiment of the invention is shown. The group of figures 4 comprises figures 4a, 4a', 4b, 41b, 4b', 4c, 4c', 4d, 4e, 4f, 4g, 4h, 4i, 4l, 4m.

Figure 4a is an overall view of the external wheel side of the mudguard of the third embodiment.

Figure 4b is an overall view of the internal wheel side of the mudguard of the third embodiment.

Figure 4c is a bottom view of the operational components 2, from its radially internal surface, in the third embodiment.

Figure 4d is a view of an internal detail of the mantle of the mudguard of figure 4c in the third embodiment.

With particular reference to figures 4c and 4d, according to the invention, each radial expansion 6a, 6b comprises a corresponding slot-shaped split preferably having the shape of a through slot 10a, 10b derived in a head or side edging 4 aligned along an axial direction of the mudguard and having an arc-shaped conformation along a circumferential direction of the mudguard 1 with respect to the central axis A-A.

Such slot-shaped splits 10a and 10b are positioned on the side of the mudguard afferent to the internal part of the wheel.

With particular reference to figures 4c and 4d, according to the invention, the mudguard 1 comprises third mounting means made as follows:
at least one sleeve 12 coupled to the operational wall 2 and axially extending through the slot-shaped split 10a, 10b and
a quick graft tube 19a,19b, arranged for an engaging coupling within the sleeve 12, preferably by toothing 29 axially arranged on the quick graft tube 19.

The quick graft tube 19 is provided with holes 39 contiguous to the toothing 29 and whose function is to accommodate dedicated safety systems 20.

Once coupled the quick graft tube 19 with the above-mentioned sleeve 12 and secured in an axial position by engaging the teeth 29 with corresponding seats 121 derived on the sleeves 12 they allow safety systems 20 irreversibly housed in dedicated holes 39 to be used.

According to the invention, each sleeve 12 is associated with the operational wall 2 so as to be movable in circumferential direction with respect to the central axis A-A along the slot-shaped split 10a, 10b, and to slide according to said circumferential trajectory, because the sleeve has skids 122a, 122b connected thereto which engage with the same amount of racks 21a and 21b arranged inside the operational wall 2; any sleeve being provided with two dedicated sliders adapted to slide on said racks 21a and 21b so as to move along the circumferential direction within the adjusting space allowed by the inscription of the terminal cylindrical element of the sleeve 124 within the slot-shaped splits 10a and 10b.

Each slot-shaped split 10a, 10b has a graduated scale 17 on both the internal vertical sides of the mudguard so as to be able to adjust the sleeve 12 along the allowed circumferential trajectory.

In other words, the positioning of the sleeve 12 in a position related to the mudguard 1 in the dedicated radial expansions 6a and 6b is facilitated by the presence of dedicated graduated scales 17 derived on the operational wall 2 of the mudguard 1 and positioned inside the head edging 4.

A hole which allows the quick graft tube 19a, 19b to be coupled with an external abutment, for example a frame of a vehicle, and to be stably fixed thereto preferably by means of known-type systems (screws and washers), is derived on the head edging 4 axially opposed with respect to that containing the slot-shaped split 10a, 10b.

The effect of blocking the rotation, figures 4e and 4f, in a circumferential direction of said sleeves 12 is ensured by the action of grafting a safety system 22 which engages on the extrados of the rack 21 forcing the sliders 121 also toothed to engage with the related teeth of the rack, and derived on the sleeves 12, thus preventing any possible movement, both radial and circumferential.

The technical effect achieved by the sleeve-quick graft tube assembly is an adjustable positioning of the sleeve along the slot-shaped split allowing to hold the sleeve in accordance with an external coupling abutment, for example the frame of the vehicle, at suitable housing holes, and also to adapt the mudguard to the correct ground clearance and from the wheel of the vehicle to be surrounded.

With particular reference to figure 4c, according to the invention, the mudguard 1 comprises two racks 21a and 21b for each radial expansion 6a, 6b mounted on a radially internal surface of the operational wall 2 at the proximity of the slot-shaped splits 10a, 10b; the sleeve 12 is adapted to slide on racks 21a, 21b so as to move along the circumferential direction.

According to the invention the mudguard 1 comprises two safety plugs 22 to be mounted on any sleeve 12 arranged for blocking the sliders 122a and 122b integral with the sleeve 12 on both the racks 21a, 21b.

With particular reference to figures 4b and 4b', blocking means 14 and 15 are also provided, particularly closing bulkheads 14 and 15, adapted to ensure covering of the side openings after positioning the sleeve 12 in the corresponding seats 10a and 10b.

Particularly, with reference to figures 4b, 4.1b, 4b' such blocking means 14 and 15 complete the side surface portions 4 on the mudguard 1.

The achieved technical effect is an efficient block of the sleeve-tube+-caps assembly in the achieved position which prevents sprays from leaking from the assembly when using the product. Preferably in figure 4b, such closing bulkheads 14, 15 engage with the mudguard through the slot-shaped split 10a and 10b, with a snap operating mechanism 141 and 151.

With particular reference to figure 4b and 4b', a safety cap 16 is provided for blocking in position in the slot-shaped splits 10a, 10b and also engaging with the sleeve 12.

The safety cap 16 is provided with a snap teeth system 161 which engages with the sleeve 12 on which there are slots 125 in which said teeth 161 are caught (fig. 4i, 4l) in the proximity of the input end section of the tube 124.

The technical effect is an efficient block of the sleeve-tube assembly in the achieved position which further contributes to prevent a relative movement between the assembly and the mudguard, said system also performs the function of eliminating the leakage of water sprays through head or side edgings 4.

In a second aspect, the invention describes two alternative methods for mounting a mudguard to a vehicle. The two methods described share some common initial steps, then differentiate depending on the type of passages (7a,7b; 10a,10b) provided in the two versions of the mudguard, the so-called quick graft (QG) version, described in claim 10, and the so-called adjustable quick graft (AQG) version, described in claims 11 and 12.

Both thehe methods provides the step of arranging a mudguard 1 as previously described in the third embodiment, preferably with radial expansions such that each circumferential extension of the radial expansions 6a, 6b with respect to the central axis A-A underlies a central angle α1, α2 so as to be, together with α1 and α2, symmetrical with respect to the centreline plane passing through the axis A-A.

In a subsequent step of both the methods, the arranging of passages 7a,7b; 10a,10b in the head edging 4 is provided.

In a first method, in the so-called quick graft (QG) version, the passages comprise holes with related sleeves 7a, 7b, any sleeve 7a, 7b being provided with a corresponding head 124, said holes being part of corresponding slot-shaped splits 10a, 10b.

The first method further comprises the steps of inserting a quick graft tube 19a, 19b in any corresponding sleeve 12 for a tightening in accordance with an external coupling abutment.

The first method further comprises the steps of:
- mounting blocking means 14 and 15 closing residual portions of the slot-shaped splits 10a and 10b, with respect to the sleeve head 124, the blocking means 14 and 15 being provided with snap systems 141, 151 engaging with the head or side edgings 4;
- inserting a safety cap 16 on any quick graft tube 19a, 19b, which is free to move thereon;
- placing near and inserting the safety cap 16 on the sleeve head 124 so that the teeth 161 being on the cap to be engaged with corresponding slots 125 on the sleeve.

In a second method, in the so-called Adjustable Quick Graft (AQG) version, the passages comprise slot-shaped splits 10a, 10b derived in the head edging 4.

The second method further comprises the steps of:
- positioning a sleeve 12a, 12b in the slot-shaped splits 10a, 10b;
- allowing the sleeve 12a, 12b to circumferentially slide in the slot-shaped splits with respect to the axis A-A, such that said sleeve 12a, 12b is positioned in accordance with an external coupling abutment, preferably with respect to suitable graduated scales 17a and 17b;
- blocking the movement of the sleeve 12a, 12b by safety plugs 22a and 22b;
- inserting a safety cap 16 on any quick graft tube 19a, 19b to be used in a subsequent step, carefully orienting blocking means 29 of said tube and teeth of said safety cap 16 in the same direction.

The second method comprises the steps of:
- inserting a quick graft tube 19a,19b in any corresponding sleeve 12a, 12b for a tightening in accordance with an external coupling abutment.
- mounting blocking means 14 and 15 closing residual portions of the slot-shaped splits 10a and 10b, with respect to the sleeve head 124, the blocking means 14 and 15 being provided with snap systems 141, 151 engaging with the head or side edgings 4;
- placing near and inserting the safety cap 16, on the sleeve head 124 so that the teeth 161 being on the cap to be engaged with corresponding slots 125 on the sleeve.

## Claims

1. Mudguard (1) for vehicle comprising:
- an operational wall (2) of mudguard in unique body having an arc-shaped development around a central axis (A-A) suited to be arranged parallel to a rotation axis of a vehicle tyre;
- a head edging (4) surrounding each longer side of said operational wall (2), any head or lateral edging (4) protruding from said operational wall (2) towards a concavity of said operational wall (2) and in unique body with said operational wall (2);
- wherein said operational wall (2) comprises two radial expansions (6a,6b) in unique body with said operational wall (2), each radial expansion axially protruding between said head edgings (4) and radially away from said central axis (A-A), wherein said radial expansion (6a,6b) are arranged for a coupling with mounting means (8a,8b,18a,18b,19a,19b,12a,12b) of said mudguard (1) to the vehicle, each radial expansion (6a,6b) **characterized in that** it comprises a corresponding through split (10a,10b) derived in a head edging (4) aligned along an axial direction of the mudguard and having an arc-shaped conformation along a circumferential direction of the mudguard (1) with respect to said central axis (A-A).

2. Mudguard according to claim 1 wherein said radial expansions (6a,6b) are arranged in symmetrical positions with respect to a centerline plane of said mudguard (1) passing through said central axis (A-A).

3. Mudguard according to the previous claims, **characterized in that** said mounting means (12a,12b;19a,19b) comprise:
at least one sleeve (12) coupled with said operational wall (2) and protruding axially through the split (10a, 10b) and
a quick-graft tube (19a,19b); said quick-graft tube (19a,19b) being arranged for an engaging coupling within said sleeve (12) by toothing (29) axially arranged on the tube.

4. Mudguard according to claim 3, wherein each sleeve (12) is associated with said operational wall (2) so as to be movable in circumferential direction with respect to said central axis (A-A) along said split (10a,10b).

5. Mudguard according to any one of the previous claims, **characterized in that** it comprises two racks (21a and 21b) per each radial expansion, mounted on a radially internal surface of the operational wall (2) at the proximity of said splits (10a,10b).

6. Mudguard according to any one of the previous claims, **characterized in that** two sleeves (12), one for each radial protrusion (6a and 6b) can be mounted, any sleeve being equipped with two proper sliders (122a and 122b) adapted to slide on said racks (21a and 21b) so as to move along the circumferential direction within the adjusting space allowed by the inscription of the end cylindrical element of the sleeve (124) inside the slot (10a and 10b).

7. Mudguard according to any one of the previous claims, **characterized in that** a positioning of the sleeve (12) in relative position to the mudguard (1) in the proper radial in the proper radial protrusions (6a and 6b) is promoted by the presence of proper graduated scales (17) derived on the operational wall (2) of the mudguard (1) and positioned within the head edging (4).

8. Mudguard according to any one of the previous claims, **characterized in that** the sleeve (12) movable within the split (10a and 10b) is blocked through the use of a safety graft (22a and 22b) engaging on the extrados of the rack (21a and 21b) and forcing the slider (122a and 122b) to engage its teeth with the homologous on the rack, thus preventing any possible relative movement of said sleeve (12) with respect to the mudguard (1).

9. Mudguard according to claim 8, wherein said teeth (29) on said tube are engaged with slots (121) derived on the sleeves to an insertion of a tube (19a and 19b) in any sleeve (12); and a safety device (20) engaging through teeth derived on it irreversibly on proper holes (39) on said tubes (19a and 19b).

10. Method for mounting a mudguard to a vehicle, comprising the steps of:
providing a mudguard (1) comprising:
- an operational wall (2) of mudguard in unique body having an arc-development around a central axis (A-A) suitable for arranging parallel to a rotation axis of a vehicle tyre;
- a head edging (4) surrounding each longer side of said operational wall (2), any head edging (4) protruding from said operational wall (2) towards a concavity of said operational wall (2) and in unique body with said operational wall (2);
wherein said operational wall (2) comprises two radial expansion (6a,6b) in unique body with said operational wall (2), each radial expansion protruding axially of said head edgings (4) and radially away from said central axis (A-A),
providing passages (7a,7b; 10a,10b) in said head edging (4) wherein said passages (7a,7b; 10a,10b) comprise holes with related sleeves (7a,7b), any sleeve (7a,7b) being provided with a corresponding head (124), said holes being part of corresponding splits (10a,10b);
inserting a quick-graft tube (19a,19b) in any corresponding sleeve (12a, 12b) for a tightening in accordance with an external coupling abutment;
mounting blocking means (14 and 15) closing residual portions of the splits (10a and 10b), with respect to said sleeve head (124), said blocking means (14 and 15) being provided with snap systems (141, 151) engaging with the lateral or head edgings (4);
inserting a safety cap (16) on any quick-graft tube (19a,19b), which is free to move thereon; placing near and inserting said safety cap (16), on the sleeve head (124) so that teeth (161) being on the cap to be engaged with the corresponding slots (125) on the sleeve.

11. Method for mounting a mudguard to a vehicle, comprising the steps of:
providing a mudguard (1) comprising:
- an operational wall (2) of mudguard in unique body having an arc-development around a central axis (A-A) suitable for arranging parallel to a rotation axis of a vehicle tyre;
- a head edging (4) surrounding each longer side of said operational wall (2), any head edging (4) protruding from said operational wall (2) towards a concavity of said operational wall (2) and in unique body with said operational wall (2);
wherein said operational wall (2) comprises two radial expansion (6a,6b) in unique body with said operational wall (2), each radial expansion protruding axially of said head edgings (4) and radially away from said central axis (A-A), providing passages (7a,7b; 10a,10b) in said head edging (4) wherein said passages (7a,7b; 10a,10b) comprise splits (10a,10b) derived in said head edging (4);
positioning a sleeve (12) in the splits (10a,10b);
allowing the sleeve (12) to circumferentially slide in the splits with respect to A-A axis, such that said sleeve (12) to be positioned in accordance with an external coupling abutment, preferably with respect to suitable graduated scales (17a and 17b);
blocking the movement of the sleeve (12) by safety plugs (22a and 22b);
inserting a safety cap (16) on any quick-graft tube (19a,19b) to be used in a subsequent step, carefully orienting blocking means (29) of said tube and teeth of said safety cap (16) in the same direction.

12. Method according to claim 11, further comprising the steps of:
inserting a quick-graft tube (19a,19b) in any corresponding sleeve (12) for a tightening in accordance with an external coupling abutment;
mounting blocking means (14 and 15) closing residual portions of the splits (10a and 10b), with respect to said sleeve head (124), said blocking means (14 and 15) being provided with snap systems (141, 151) engaging with the lateral or head edgings (4);
placing near and inserting said safety cap (16), on the sleeve head (124) so that in teeth (161) being on the cap to be engaged with corresponding slots (125) on the sleeve.

## Patentansprüche

1. Kotflügel (1) für ein Fahrzeug, umfassend:
- eine funktionale Wand (2) des Kotflügels als einzelner Körper mit einer bogenförmigen Ausformung um eine Mittelachse (A-A), die dazu geeignet ist, parallel zu einer Drehachse eines Fahrzeugreifens angeordnet zu sein;
- eine Kopfkante (4), die jede Längsseite der funktionalen Wand (2) umgibt, wobei jede Kopf- oder Seitenkante (4) aus der funktionalen Wand (2) in Richtung einer Wölbung der funktionalen Wand (2) hervorsteht und als einzelner Körper mit der funktionalen Wand (2) gebildet ist;
- wobei die funktionale Wand (2) zwei radiale Erweiterungen (6a, 6b) als einzelnen Körper mit der funktionalen Wand (2) umfasst, wobei jede radiale Erweiterung axial zwischen den Kopfkanten (4) und radial von der Mittelachse (A-A) weg hervorsteht, wobei die radialen Erweiterungen (6a, 6b) zum Koppeln mit Befestigungsmitteln (8a, 8b, 18a, 18b, 19a, 19b, 12a, 12b) des Kotflügels (1) an dem Fahrzeug angeordnet sind, wobei jede radiale Erweiterung (6a, 6b) **dadurch gekennzeichnet ist, dass** sie einen entsprechenden Durchgangsspalt (10a, 10b) umfasst, der in einer Kopfkante (4) gebildet ist und entlang einer axialen Richtung des Kotflügels ausgerichtet ist und eine bogenförmige Gestalt entlang einer Umfangsrichtung des Kotflügels (1) in Bezug auf die Mittelachse (A-A) aufweist.

2. Kotflügel nach Anspruch 1, wobei die radialen Erweiterungen (6a, 6b) in symmetrischen Positionen in Bezug auf eine Mittellinienebene des Kotflügels (1) angeordnet sind, die durch die Mittelachse (A-A) verläuft.

3. Kotflügel nach den vorhergehenden Ansprüchen, **dadurch gekennzeichnet, dass** die Befestigungsmittel (12a, 12b; 19a, 19b) umfassen:
mindestens eine Hülse (12), die mit der funktionalen Wand (2) gekoppelt ist und axial durch den Spalt (10a, 10b) hervorsteht, und
ein Schnellverbindungsrohr (19a, 19b), wobei das Schnellverbindungsrohr (19a, 19b) zum eingreifenden Koppeln innerhalb der Hülse (12) durch eine axial auf dem Rohr angeordnete Verzahnung (29) angeordnet ist.

4. Kotflügel nach Anspruch 3, wobei jede Hülse (12) mit der funktionalen Wand (2) derart verbunden ist, dass sie in Umfangsrichtung in Bezug auf die Mittelachse (A-A) entlang des Spalts (10a, 10b) bewegbar ist.

5. Kotflügel nach einem der vorhergehenden Ansprüche, **dadurch gekennzeichnet, dass** er für jede radiale Erweiterung zwei Zahnstangen (21a und 21b) umfasst, die an einer radial inneren Fläche der funktionalen Wand (2) in der Nähe der Spalten (10a, 10b) montiert sind.

6. Kotflügel nach einem der vorhergehenden Ansprüche, **dadurch gekennzeichnet, dass** zwei Hülsen (12), je eine für jeden radialen Vorsprung (6a und 6b), montiert werden können, wobei jede Hülse mit zwei geeigneten Gleitstücken (122a und 122b) ausgestattet ist, die zum Gleiten auf den Zahnstangen (21a und 21b) ausgelegt sind, um sich entlang der Umfangsrichtung innerhalb des durch die Einbuchtung des zylindrischen Endelements der Hülse (124) im Inneren des Spalts (10a und 10b) vorgegebenen Verstellraums zu bewegen.

7. Kotflügel nach einem der vorhergehenden Ansprüche, **dadurch gekennzeichnet, dass** eine Positionierung der Hülse (12) in relativer Position zu dem Kotflügel (1) in den geeigneten radialen Vorsprüngen (6a und 6b) durch das Vorhandensein geeigneter abgestufter Skalen (17) erleichtert wird, die an der funktionalen Wand (2) des Kotflügels (1) gebildet und innerhalb der Kopfkante (4) positioniert sind.

8. Kotflügel nach einem der vorhergehenden Ansprüche, **dadurch gekennzeichnet, dass** die innerhalb des Spalts (10a und 10b) bewegbare Hülse (12) durch die Verwendung eines Sicherheitszapfens (22a und 22b) blockiert wird, der auf der Außenseite der Zahnstange (21a und 21b) eingreift und das Gleitstück (122a und 122b) dazu zwingt, mit dessen Zähnen in die entsprechenden Zähne an der Zahnstange einzugreifen, wodurch eine mögliche Relativbewegung der Hülse (12) in Bezug auf den Kotflügel (1) verhindert wird.

9. Kotflügel nach Anspruch 8, wobei die Zähne (29) auf dem Rohr in Schlitze (121) eingreifen, die auf den Hülsen zum Einsetzen eines Rohrs (19a und 19b) in eine beliebige Hülse (12) gebildet sind; und eine Sicherheitsvorrichtung (20) durch darauf gebildete Zähne bleibend in geeignete Löcher (39) an den Rohren (19a und 19b) eingreift.

10. Verfahren zur Montage eines Kotflügels an einem Fahrzeug, das die folgenden Schritte umfasst:
Bereitstellen eines Kotflügels (1), umfassend:
∘ eine funktionale Wand (2) des Kotflügels als einzelner Körper mit einer bogenförmigen Ausformung um eine Mittelachse (A-A), die zum parallelen Anordnen zu einer Drehachse eines Fahrzeugreifens geeignet ist;
∘ eine Kopfkante (4), die jede Längsseite der funktionalen Wand (2) umgibt, wobei jede Kopfkante (4) aus der funktionalen Wand (2) in Richtung einer Wölbung der funktionalen Wand (2) hervorsteht und als einzelner Körper mit der funktionalen Wand (2) gebildet ist;
wobei die funktionale Wand (2) zwei radiale Erweiterungen (6a, 6b) als einzelnen Körper mit der funktionalen Wand (2) umfasst, wobei jede radiale Erweiterung axial aus den Kopfkanten (4) und radial von der Mittelachse (A-A) weg hervorsteht,
Bereitstellen von Durchgängen (7a, 7b; 10a, 10b) in der Kopfkante (4), wobei die Durchgänge (7a, 7b; 10a, 10b) Löcher mit zugehörigen Hülsen (7a, 7b) umfassen, wobei jede Hülse (7a, 7b) mit einem entsprechenden Kopf (124) versehen ist und die Löcher Teil entsprechender Spalten (10a, 10b) sind;
Einsetzen eines Schnellverbindungsrohrs (19a, 19b) in eine entsprechende Hülse (12a, 12b) zum Festziehen in Übereinstimmung mit einem externen Kopplungsanschlag;
Montieren von Verschlussmitteln (14 und 15) zum Verschließen der verbleibenden Abschnitte der Spalten (10a und 10b) in Bezug auf den Hülsenkopf (124), wobei die Verschlussmittel (14 und 15) mit Schnappsystemen (141, 151) versehen sind, die in die Seiten- oder Kopfkanten (4) eingreifen;
Aufsetzen einer Sicherheitskappe (16) auf ein beliebiges Schnellverbindungsrohr (19a, 19b), die sich darauf frei bewegen kann;
Platzieren in der Nähe von und Aufsetzen der Sicherheitskappe (16) auf den Hülsenkopf (124) derart, dass die auf der Kappe befindlichen Zähne (161) in die entsprechenden Schlitze (125) auf der Hülse eingreifen.

11. Verfahren zur Montage eines Kotflügels an einem Fahrzeug, das die folgenden Schritte umfasst:
Bereitstellen eines Kotflügels (1), umfassend:
- eine funktionale Wand (2) des Kotflügels als einzelner Körper mit einer bogenförmigen Ausformung um eine Mittelachse (A-A), die zum parallelen Anordnen zu einer Drehachse eines Fahrzeugreifens geeignet ist;
- eine Kopfkante (4), die jede Längsseite der funktionalen Wand (2) umgibt, wobei jede Kopfkante (4) aus der funktionalen Wand (2) in Richtung einer Wölbung der funktionalen Wand (2) hervorsteht und als einzelner Körper mit der funktionalen Wand (2) gebildet ist;
wobei die funktionale Wand (2) zwei radiale Erweiterungen (6a, 6b) als einzelnen Körper mit der funktionalen Wand (2) umfasst, wobei jede radiale Erweiterung axial aus den Kopfkanten (4) und radial von der Mittelachse (A-A) weg hervorsteht,
Bereitstellen von Durchgängen (7a, 7b; 10a, 10b) in der Kopfkante (4), wobei die Durchgänge (7a, 7b; 10a, 10b) Spalten (10a,10b) umfassen, die in der Kopfkante (4) gebildet sind;
Positionieren einer Hülse (12) in den Spalten (10a,10b);
Zulassen, dass die Hülse (12) in Umfangsrichtung in den Spalten in Bezug auf die A-A-Achse gleitet, sodass die Hülse (12) in Übereinstimmung mit einem externen Kopplungsanschlag, vorzugsweise in Bezug auf geeignete abgestufte Skalen (17a und 17b), positioniert wird;
Blockieren der Bewegung der Hülse (12) durch Sicherheitszapfen (22a und 22b);
Aufsetzen einer Sicherheitskappe (16) auf ein Schnellverbindungsrohr (19a, 19b), das in einem nachfolgenden Schritt verwendet wird, wobei die Verschlussmittel (29) des Rohrs und die Zähne der Sicherheitskappe (16) sorgfältig in dieselbe Richtung ausgerichtet werden.

12. Verfahren nach Anspruch 11, ferner umfassend die folgenden Schritte:
Einsetzen eines Schnellverbindungsrohrs (19a, 19b) in eine entsprechende Hülse (12) zum Festziehen in Übereinstimmung mit einem externen Kopplungsanschlag;
Montieren von Verschlussmitteln (14 und 15) zum Verschließen der verbleibenden Abschnitte der Spalten (10a und 10b) in Bezug auf den Hülsenkopf (124), wobei die Verschlussmittel (14 und 15) mit Schnappsystemen (141, 151) versehen sind, die in die Seiten- oder Kopfkanten (4) eingreifen;
Platzieren in der Nähe von und Aufsetzen der Sicherheitskappe (16) auf den Hülsenkopf (124) derart, dass die auf der Kappe befindlichen Zähne (161) in entsprechende Schlitze (125) auf der Hülse eingreifen.

## Revendications

1. Garde-boue (1) pour véhicule comprenant :
- une paroi opérationnelle (2) de garde-boue dans un corps unique ayant un développement en forme d'arc autour d'un axe central (A-A) adapté pour être disposé parallèlement à un axe de rotation d'un pneumatique de véhicule;
- une bordure de tête (4) entourant chaque côté plus long de ladite paroi opérationnelle (2), toute bordure de tête ou latérale (4) faisant saillie de ladite paroi opérationnelle (2) vers une concavité de ladite paroi opérationnelle (2) et en corps unique avec ladite paroi opérationnelle (2) ;
- dans lequel ladite paroi opérationnelle (2) comprend deux expansions radiales (6a, 6b) dans un corps unique avec ladite paroi opérationnelle (2), chaque expansion radiale faisant saillie axialement entre lesdites bordures de tête (4) et s'éloignant radialement dudit axe central (A-A), dans lequel ladite expansion radiale (6a, 6b) est disposée pour un couplage avec des moyens de montage (8a, 8b, 18a, 18b, 19a, 19b, 12a, 12b) dudit garde-boue (1) au véhicule, chaque expansion radiale (6a, 6b) étant **caractérisée en ce qu'**elle comprend une fente traversante correspondante (10a, 10b) dérivée d'une bordure de tête (4) alignée le long d'une direction axiale du garde-boue et ayant une conformation en forme d'arc le long d'une direction circonférentielle du garde-boue (1) par rapport audit axe central (A-A).

2. Garde-boue selon la revendication 1, dans lequel lesdites expansions radiales (6a, 6b) sont disposées dans des positions symétriques par rapport à un plan de la ligne médiane dudit garde-boue (1) passant par ledit axe central (A-A).

3. Garde-boue selon les revendications précédentes, **caractérisé en ce que** lesdits moyens de montage (12a, 12b ; 19a, 19b) comprennent :
• au moins un manchon (12) couplé à ladite paroi opérationnelle (2) et faisant saillie axialement à travers la fente (10a, 10b), et
• un tube à greffe rapide (19a, 19b) ; ledit tube à greffe rapide (19a, 19b) étant disposé pour un couplage d'engagement à l'intérieur dudit manchon (12) par une denture (29) disposée axialement sur le tube.

4. Garde-boue selon la revendication 3, dans lequel chaque manchon (12) est associé à ladite paroi opérationnelle (2) de manière à être mobile dans la direction circonférentielle par rapport audit axe central (A-A) le long de ladite fente (10a, 10b).

5. Garde-boue selon l'une quelconque des revendications précédentes, **caractérisé en ce qu'**il comprend deux crémaillères (21a et 21b) pour chaque expansion radiale, montées sur une surface radialement interne de la paroi opérationnelle (2) à proximité desdites fentes (10a, 10b).

6. Garde-boue selon l'une quelconque des revendications précédentes, **caractérisé en ce que** deux manchons (12), un pour chaque saillie radiale (6a et 6b), peuvent être montés, tout manchon étant équipé de deux coulisseaux appropriés (122a et 122b) adaptés pour coulisser sur lesdites crémaillères (21a et 21b) de manière à se déplacer le long de la direction circonférentielle dans l'espace de réglage permis par l'inscription de l'élément cylindrique d'extrémité du manchon (124) à l'intérieur de la fente (10a et 10b).

7. Garde-boue selon l'une quelconque des revendications précédentes, **caractérisé en ce qu'**un positionnement du manchon (12) en position relative par rapport au garde-boue (1) dans les saillies radiales appropriées (6a et 6b) est favorisé par la présence d'échelles graduées appropriées (17) dérivées sur la paroi opérationnelle (2) du garde-boue (1) et positionnées à l'intérieur de la bordure de tête (4).

8. Garde-boue selon l'une quelconque des revendications précédentes, **caractérisé en ce que** le manchon (12) mobile à l'intérieur de la fente (10a et 10b) est bloqué par l'utilisation d'une greffe de sécurité (22a et 22b) s'engageant sur l'extrados de la crémaillère (21a et 21b) et forçant le coulisseau (122a et 122b) à engager ses dents avec l'homologue sur la crémaillère, empêchant ainsi tout mouvement relatif possible dudit manchon (12) par rapport au garde-boue (1).

9. Garde-boue selon la revendication 8, dans lequel lesdites dents (29) sur ledit tube sont engagées avec des rainures (121) dérivées sur les manchons à une insertion d'un tube (19a et 19b) dans n'importe quel manchon (12) ; et un dispositif de sécurité (20) s'engageant, à travers des dents dérivées sur celui-ci, de manière irréversible sur des trous appropriés (39) sur lesdits tubes (19a et 19b).

10. Procédé de montage d'un garde-boue sur un véhicule, comprenant les étapes suivantes:
• prévoir un garde-boue (1) comprenant :
∘ une paroi opérationnelle (2) de garde-boue dans un corps unique ayant un développement d'arc autour d'un axe central (A-A) adapté pour être disposé parallèlement à un axe de rotation d'un pneu de véhicule ;
∘ une bordure de tête (4) entourant chaque côté plus long de ladite paroi opérationnelle (2), toute bordure de tête (4) faisant saillie de ladite paroi opérationnelle (2) vers une concavité de ladite paroi opérationnelle (2) et dans un corps unique avec ladite paroi opérationnelle (2) ;
dans lequel ladite paroi opérationnelle (2) comprend deux extensions radiales (6a, 6b) dans un corps unique avec ladite paroi opérationnelle (2), chaque extension radiale faisant saillie axialement desdites bordures de tête (4) et s'éloignant radialement dudit axe central (A-A),
prévoir des passages (7a, 7b ; 10a, 10b) dans ladite bordure de tête (4), lesdits passages (7a, 7b ; 10a, 10b) comprenant des trous avec des manchons associés (7a, 7b), tout manchon (7a, 7b) étant pourvu d'une tête correspondante (124), lesdits trous faisant partie de fentes correspondantes (10a, 10b) ;
insérer un tube à greffe rapide (19a, 19b) dans tout manchon correspondant (12a, 12b) pour un serrage conformément à une butée de couplage externe ;
des moyens de blocage de montage (14 et 15) fermant les parties résiduelles des fentes (10a et 10b), par rapport à ladite tête de manchon (124), lesdits moyens de blocage (14 et 15) étant munis de systèmes d'encliquetage (141, 151) s'engageant avec les bordures latérales ou de tête (4) ;
insérer un capuchon de sécurité (16) sur tout tube à greffe rapide (19a, 19b), qui est libre de se déplacer sur celui-ci ;
placer et insérer ledit capuchon de sécurité (16) sur la tête de manchon (124) de sorte que les dents (161) sur le capuchon viennent en prise avec les rainures correspondantes (125) sur le manchon.

11. Procédé de montage d'un garde-boue sur un véhicule, comprenant les étape suivantes :
• prévoir un garde-boue (1) comprenant :
∘ une paroi opérationnelle (2) de garde-boue dans un corps unique ayant un développement d'arc autour d'un axe central (A-A) adapté pour être disposé parallèlement à un axe de rotation d'un pneu de véhicule ;
∘ une bordure de tête (4) entourant chaque côté plus long de ladite paroi opérationnelle (2), toute bordure de tête (4) faisant saillie de ladite paroi opérationnelle (2) vers une concavité de ladite paroi opérationnelle (2) et dans un corps unique avec ladite paroi opérationnelle (2) ;
dans lequel ladite paroi opérationnelle (2) comprend deux extensions radiales (6a, 6b) dans un corps unique avec ladite paroi opérationnelle (2), chaque extension radiale faisant saillie axialement desdites bordures de tête (4) et s'éloignant radialement dudit axe central (A-A),
prévoir des passages (7a, 7b ; 10a, 10b) dans ladite bordure de tête (4), lesdits passages (7a, 7b ; 10a, 10b) comprenant des fentes (10a, 10b) dérivées dans ladite bordure de tête (4) ;
positionner un manchon (12) dans les fentes (10a, 10b) ;
permettre au manchon (12) de coulisser circonférentiellement dans les fentes par rapport à l'axe A-A, de sorte que ledit manchon (12) soit positionné conformément à une butée de couplage externe, de préférence par rapport à des échelles graduées appropriées (17a et 17b) ;
bloquer le mouvement du manchon (12) par des bouchons de sécurité (22a et 22b) ;
insérer un capuchon de sécurité (16) sur tout tube à greffe rapide (19a, 19b) à utiliser dans une étape ultérieure, en orientant soigneusement les moyens de blocage (29) dudit tube et les dents dudit capuchon de sécurité (16) dans la même direction.

12. Procédé selon la revendication 11, comprenant en outre les étapes suivantes :
insérer un tube à greffe rapide (19a, 19b) dans tout manchon correspondant (12) pour un serrage conformément à une butée de couplage externe ;
des moyens de blocage de montage (14 et 15) fermant les parties résiduelles des fentes (10a et 10b), par rapport à ladite tête de manchon (124), lesdits moyens de blocage (14 et 15) étant munis de systèmes d'encliquetage (141, 151) s'engageant avec les bordures latérales ou de tête (4) ;
placer et insérer ledit capuchon de sécurité (16) sur la tête de manchon (124) de sorte que les dents (161) sur le capuchon soient en prise avec les rainures correspondantes (125) sur le manchon.
